# EUROPEAN PATENT SPECIFICATION

(11) **EP 2 583 822 B1**
(45) Date of publication and mention of the grant of the patent: **21.09.2016**
(21) Application number: 12002480.7
(22) Date of filing: 05.04.2012
(51) Int. Cl.: B32B 17/10, E06B 3/54

(54) **LAMINATED SAFETY GLASS WITH FASTENING TRUNCATED-CONE-SHAPED PLATES OR STUDS HOUSED INSIDE THE SAME LAMINATED GLASS**
VERBUNDSICHERHEITSGLAS MIT KEGELSTUMPFFÖRMIGEN BEFESTIGUNGSPLATTEN ODER STEHBOLZEN, DIE INNERHALB DESSELBEN VERBUNDGLASES UNTERGEBRACHT SIND
VITRAGE DE SÉCURITÉ FEUILLETÉ AVEC DES BOULONS OU PLAQUES DE FIXATION TRONCONIQUES LOGÉS À L'INTÉRIEUR DU MÊME VITRAGE FEUILLETÉ

(30) Priority: 19.10.2011 IT MI20110332
(43) Date of publication of application: 24.04.2013
(73) Proprietor: VETRERIA F.LLI PACI S.R.L., 20090 Monza (IT)
(72) Inventor: Maurilio, Paci, 20831 Seregno (MB) (IT)
(74) Representative: La Ciura, Salvatore

(56) References cited:
- DE-A1-102006 027 074
- DE-C1- 19 958 372
- DE-U1-202006 007 201
- US-A- 4 793 112
- US-A1- 2005 188 634

## Description

### Technical field of the invention

The present invention proposes a laminated safety glass, made of two or more sheets or panes of glass or crystal, of the type with little support plates or studs for fastening glass components for furniture or glass walls and parapets of buildings to respective support structures, wherein such little plates or studs have a truncated cone shape and are partially housed inside only one of the two or more sheets or panes of glass or crystal the glass is made of, and wherein the sheet or pane which houses the plates or studs exhibits corresponding conical holes for the insertion of such conical shaped plates or studs.

### Background art

In the sectors of furnishing and building and more generally in all fields where it is needed a glass or safety glass, it is strongly felt the problem of fastening or fixing glass elements to the respective support structures in such a way to reduce to a minimum the projecting and visible parts of the fasteners and fastening means.

It is usual in the art to drill with through holes the panes or sheets of glass or crystal, of which the laminated glass is composed, inside their surface, i.e. away from the edge of the panes, so as to secure the laminated glass with threaded elements inserted in these holes, wherein these threaded elements engage and tighten the glass between them and a surface of contrast arranged on the other side of the glass, on the support structure.

There are also known laminated safety glasses in which the fasteners are constituted by metal plates or support studs that are equipped centrally with a threaded pin to be screwed to a corresponding threaded hole that is drilled in the support structure, so as to tighten the glass between such plate and a surface of contrast integral with the support structure, wherein between the contact surfaces of the glass and the metal surfaces of the fasteners there are usually interposed sheaths or liners in plastic material so as to distribute evenly the tensions on the glass and thus reduce risk of rupture.

Although these known laminated glasses, provided with fastening studs of a known type and usually drilled as seen above with a cylindrical through hole which affects the entire thickness of the glass and consequently all the panes or sheets of which it is composed, are fully operative, however they imply some limits both in their handling and use (for example with regard to resistance of the glass as a whole to stresses) and from an aesthetic point of view.

In fact, the laminated glasses of parapets or of glass front walls or of parts of furniture made of and/or provided for being fastened with this type of fastening elements are often subject to breakage during assembly, due to excessive tightening which compresses the glass beyond its limits of resistance.

### Summary of the invention

Therefore in this context there is provided the present invention which proposes a laminated safety glass, exhibiting the features of the main independent claim 1, that is composed of two or more panes or sheets of glass or crystal and is equipped with one or more fastening conical or frustoconical-shaped plates or studs that are designed to be inserted in corresponding countersunk holes (conical holes), which are formed in only one of the two or more panes or sheets of the glass in order to engage and fasten it, with such plates or studs having a threaded hole for fastening the glass to a support structure.

Therefore the claimed laminated safety glass solves the above outlined drawbacks which may arise in a laminated glass when using fastening studs and fasteners of known type applied in the traditional way by means of non-countersunk cylindrical holes drilled in the glass.

In particular the here proposed laminated glass can be advantageously used in all the fields in which the glass or crystal must be safe without exhibiting any additional structure or frame.

### Brief description of the drawings

This and other characteristics will better appear from the following detailed description, provided purely by way of a non-limiting example and with reference to the accompanying drawings, in which:
- Fig. 1 shows in section and in top view a laminated safety glass according to the present invention, equipped with a fastening conical plate or stud that is applied in a corresponding tapered or countersunk hole formed only in one (the upper one in the drawings) of the two panes or sheets of the laminated glass;
- Fig. 2 shows two separate sections respectively of the laminated glass and of the conical stud represented in Figure 1, wherein it is clearly visible that the countersunk or conical hole housing the stud is provided only in one of the two panes;
- Fig. 3 shows in an axonometric view the conical stud of Figs 1 and 2 housed in the laminated glass, in the use position in which the stud protrudes slightly at the top from the glass;
- Fig. 4 is an axonometric view, in exploded form, of the laminated glass of the previous figures.

### Description of a preferred embodiment of the invention

The innovation is now described by way of a non-limiting example with reference to the accompanying figures.

A laminated safety glass 8, or in general a laminated glass panel, is, according to a preferred version of the present invention, of the type having two sheets or panes of glass or crystal 5 and 6, with the interposition between them of a layer of plastic material 12, and comprises, for its fixing to a support structure S (not shown in the drawings), one or more studs or little plates 1, having a truncated-cone shape, that are stably incorporated within the laminated glass itself 8 and more precisely are each housed in a corresponding hole or seat 7, countersunk, that is provided and formed in the sole glass or crystal pane 5.

The truncated conical surface 2 of each single plate 1 engages a corresponding truncated conical surface 2', countersunk, of the corresponding hole 7, which, as before described, is carried out and formed only on the sheet or pane 5 of glass or crystal.

Therefore the sole sheet or pane 5 exhibits the holes 7, while the other pane 6 remains completely intact and without any type of working on its surface, also in the zone of such holes 7.

Moreover the pane 6, together with the plastic layer 12, operates as a contrast element for the plates or studs 1, holding them firmly in position against such conical surface 2'.

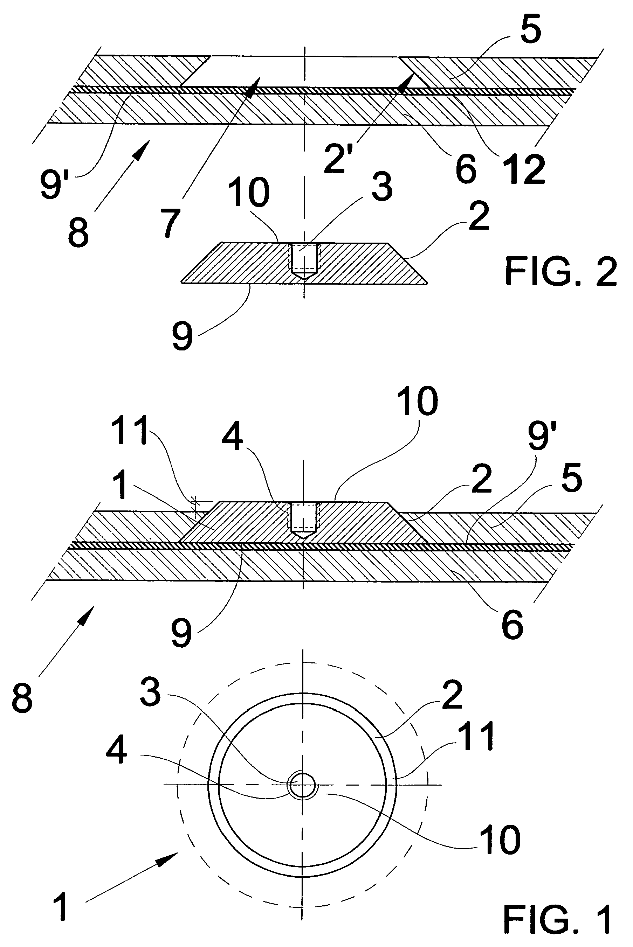

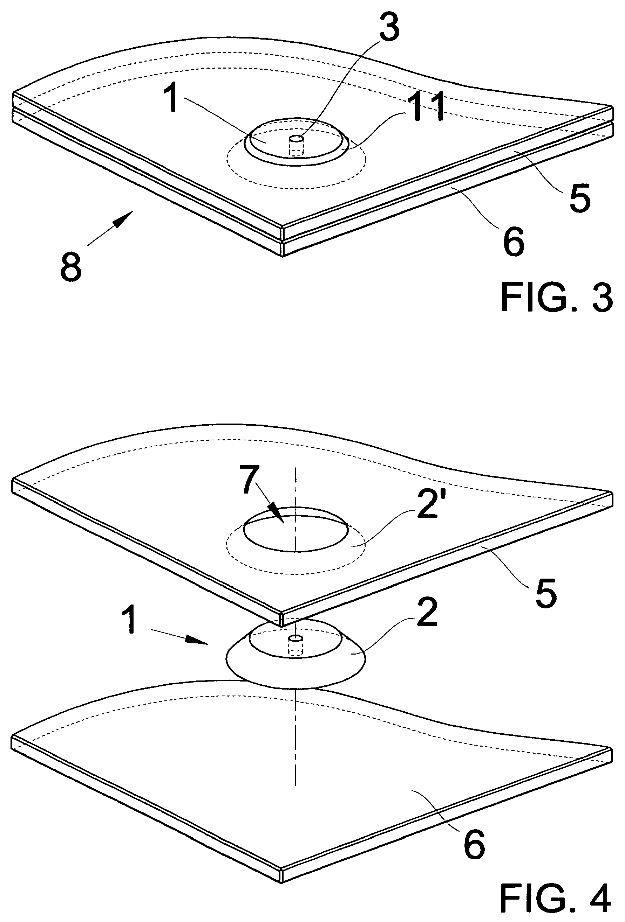

Each plate 1 is dimensioned in such a way that, once assembled (see Figs. 1 and 3), its larger base 9, housed completely within the thickness of the laminated glass 8, is perfectly adhering to the layer 12 thereby resulting arranged in the same plane of the surface 9' of the glass pane 5.

The opposite flat surface 10 of the plate or stud 1, i.e. that smaller and directed towards the side of the fastening of the glass 8 to the respective support structure S, protrudes instead with a distance 11 with respect to the outer surface of the sheet of glass or crystal 5, or of the glass 8 in its whole, and moreover has a threaded hole 3 (in the drawings the respective thread is indicated with 4) for the attachment or fastening to such support structure S.

In short, on one side the laminated glass 8 exhibits one or more plates or studs 1 that are partially embedded in only one, i.e. that indicated with 5, of the two panes 5 and 6 the laminated glass 8 is made of, with small portions 11 of these plates or studs 1 that emerge from the glass 8 with a distance that can vary according to the requirements for providing an abutment when fastening the laminated glass 8 to the respective support structure S (not shown in the drawings).

On the other side, the laminated glass 8 exhibits the other glass pane 6 that, by remaining perfectly entire and intact, i.e. without holes, acts as a support to the studs 1, with the interposition of the plastic layer 12, keeping them in position against the conical surfaces of the holes 7 that are formed on the other pane 5.

This configuration of the surfaces of the stud 1 allows the glass 8 to have, on one side, a glass or crystal pane 6 fully entire, smooth and free of protrusions, there being no hole and no type of working carried out on it, and, on the other side, a surface or protrusion 11 that is adapted to provide an abutment for the clamping and fastening of the laminated glass 8 to the support structure S, thus preventing the same glass to be stressed by compressive forces.

Therefore the innovation provides a double advantage, one aesthetic and functional at the same time, and one in terms of mechanical resistance.

In particular, the first advantage allows to have an outer surface or face of the safety glass or crystal 8 that is completely smooth and for this reason easier to clean, along which, moreover, it is avoided the formation of strips of dirt caused by weathering, whereas these strips of dirt are instead formed along the outer or front wall surface of the laminated safety glass or crystal made according to the prior art with studs that protrude.

Moreover the second advantage reduces considerably the risk of breakage during the assembly of the laminated safety glass 8, since the fixing screws to the support structure, also when being strongly tightened, acts on the surface 10 of the protrusion 11 of the plate or stud 1, whereby in this way it is eliminated any mechanical compression or stress on the laminated safety glass or panel 8 and consequently it is avoided also any breakage of it, as instead often happening in the traditional technique while assembling and laying the panel on the support structure.

The assembly is also facilitated since the plates or studs 1 are already pre-assembled in the crystal or glass 8 and this prevents any possible errors by the installation personnel.

As is clear from the description set forth above, the advantages arising from the use of the present invention are evident.

Moreover an expert in the art may make modifications and variations which will all be considered as included within the present invention

## Claims

1. Laminated safety glass (8) of the type comprising:
- two or more sheets or panes of glass or crystal (5, 6) superimposed one on the other, and
- a plurality of little plates or studs (1) that are provided for fastening the laminated glass to an external support structure (S) and are each stably housed in a respective hole or seat (7) formed in said laminated glass (8),
wherein said holes or seats (7), in which said plates or studs (1) are stably housed, are provided and formed only in one (5) or first of the two or more sheets or panes of glass or crystal (5, 6) of which said laminated safety glass (8) is composed, whereby the other or second sheet or pane (6) adjacent to the first pane (5) remains completely intact and without any type of working on its surface also in the zone of such holes or seats (7),
wherein an upper portion of each of said plates or studs (1) protrudes from the respective hole or seat (7) of the first pane (5), thereby forming a relief (11) adapted to create a contrast plain surface (10), distinct and separate from the surface of said laminated glass (8), for the fastening of the laminated safety glass to said external support structure (S).
wherein said little plates or studs (1) have a truncated cone shape (2) by which they engage with a corresponding truncated cone surface (2') defined by the holes and the seats (7), of the first pane (5), in which said plates and studs (1) are housed,
wherein said conical plates or studs (1) have at least one threaded hole (3), for the fastening of the laminated safety glass (8) to said external support structure (S), and
wherein between said first (5) and said second (6) pane of glass or crystal there is interposed a layer of plastic material (12),
whereby said second pane (6), together with said layer of plastic material (12), operates as a contrast element for the plates or stud (1), holding them firmly in position against such truncated cone surface (2').

## Patentansprüche

1. Laminiertes Sicherheitsglas (8) von der Art, die umfasst:
- zwei oder mehr übereinanderliegende Platten oder Tafeln aus Glas oder Kristall (5, 6), und
- eine Mehrzahl von kleinen Platten oder Zapfen (1), die vorgesehen sind, um das laminierte Glas an einer äußeren Tragstruktur (S) zu befestigen, und jeweils tragfähig in einem in dem laminierten Glas (8) gebildeten jeweiligen Loch oder Sitz (7) untergebracht sind,
wobei die Löcher oder Sitze (7), in denen die Platten oder Zapfen (1) tragfähig untergebracht sind, nur in einer (5) oder der ersten von den zwei oder mehr Platten oder Tafeln aus Glas oder Kristall (5, 6), aus denen das laminierte Sicherheitsglas (8) zusammengesetzt ist, vorgesehen und ausgebildet sind, wodurch die zu der ersten Tafel (5) benachbarte andere oder zweite Platte oder Tafel (6) auch in der Zone von derartigen Löchern oder Sitzen (7) völlig intakt und ohne jegliche Art von Bearbeitung an ihrer Oberfläche bleibt,
wobei ein oberer Teil von jeder von den Platten oder Zapfen (1) aus dem jeweiligen Loch oder Sitz (7) der ersten Tafel (5) herausragt, wodurch ein Relief (11) gebildet wird, das angepasst ist, um eine von der Oberfläche des laminierten Glases (8) verschiedene und getrennte ebene Gegenoberfläche (10) zur Befestigung des laminierten Sicherheitsglases an der äußeren Tragstruktur (S) zu bilden,
wobei die kleinen Platten oder Zapfen (1) eine Kegelstumpfform (2) aufweisen, durch welche sie mit einer entsprechenden Kegelstumpfoberfläche (2') in Eingriff treten, die von den Löchern und den Sitzen (7) der ersten Tafel (5), in der die Platten oder Zapfen (1) untergebracht sind, gebildet wird,
wobei die konischen Platten oder Zapfen (1) mindestens eine Gewindeöffnung (3) zur Befestigung des laminierten Sicherheitsglases (8) an der äußeren Tragstruktur (S) aufweisen, und
wobei zwischen der ersten (5) und der zweiten (6) Tafel aus Glas oder Kristall eine Schicht aus Kunststoffmaterial (12) eingefügt ist,
wodurch die zweite Tafel (6), zusammen mit der Schicht aus Kunststoffmaterial (12), als ein Gegenelement für die Platten oder Zapfen (1) wirkt, um sie gegen eine solche Kegelstumpfoberfläche (2') fest in Position zu halten.

## Revendications

1. Verre de sécurité feuilleté (8) du type comprenant :
- deux ou plusieurs feuilles ou plaques de verre ou de cristal (5, 6) superposées, et
- une pluralité de platines ou broquettes (1) mises en oeuvre pour fixer le verre feuilleté à une structure de support externe (S) et stablement logées dans des trous ou des sièges respectifs (7) formés dans ledit verre feuilleté (8),
dans lequel lesdits trous ou sièges (7) dans lesquels sont stablement logés lesdites platines ou broquette (1), sont prévus et formés seulement dans l'une (5) ou première des deux ou plusieurs feuilles ou plaques de verre ou de cristal (5, 6) composant ledit verre de sécurité feuilleté (8), l'autre ou deuxième feuille ou plaque (6) adjacente à la première plaque (5) restant complètement intacte et sans aucun usinage sur sa surface, y-inclus dans la zone de ces trous ou sièges (7),
dans lequel une partie supérieure de chacune desdites platines ou broquettes (1) fait saillie du trou ou du siège respectif (7) de la première plaque (5), et forme ainsi un relief (11) conçu pour créer une surface plate de contraste (10), distincte et séparée de la surface dudit verre feuilleté (8), four fixer le verre de sécurité feuilleté à ladite structure de support externe (S),
dans lequel lesdites platines ou broquettes (1) ont une forme tronconique (2) par laquelle elles engagent une surface tronconique (2') correspondante définie par les trous et les sièges (7) de la première plaque (5), dans laquelle lesdites platines ou broquettes (1) sont logées,
dans lequel lesdites platines ou broquettes (1) comportent au moins un trou fileté (3) pour la fixation du verre de sécurité feuilleté (8) à ladite structure de support externe (S), et
dans le quel une couche de matière plastique (12) est interposée entre ladite première plaque (5) et ladite deuxième plaque (6),
ladite deuxième plaque (6) et ladite couche de matière plastique (12) coopérant pour faire fonction d'élément de contraste pour les platines ou broquettes (1), et retenant celles-ci en positon contre ladite surface tronconique (2').
